# FASCICULE DE BREVET EUROPEEN

(11) **EP 1 239 748 B1**
(45) Date de publication et mention de la délivrance du brevet: **16.02.2005**
(21) Numéro de dépôt: 00988959.3
(22) Date de dépôt: 19.12.2000
(51) Int. Cl.: A45B 25/02, A45B 15/00, A01D 46/26

(54) **ARMATURE POUR OBJETS DEPLOYABLES TELS QUE PARAPLUIES**
TRÄGERSTRUKTUR FÜR ENTFALTBARE GEGENSTÄNDE SOWIE REGENSCHIRME
FRAME FOR OBJECTS THAT OPEN OUT, SUCH AS UMBRELLAS

(30) Priorité: 21.12.1999 FR 9916119
(43) Date de publication de la demande: 18.09.2002
(73) Titulaire: Cassagne, Serge, 75012 Paris (FR)
(72) Inventeur: Cassagne, Serge, 75012 Paris (FR)
(74) Mandataire: Lepeudry-Gautherat, Thérèse (FR)
(86) Numéro de dépôt international: PCT/FR2000/003586
(87) Numéro de publication internationale: WO 2001/045528

(56) Documents cités:
- DE-C- 58 359
- DE-U- 8 811 485
- DE-U- 8 904 937
- FR-A- 760 703
- US-A- 4 240 454
- US-A- 5 078 166
- US-A- 5 305 770

## Description

La présente invention concerne un système d'accrochage et de manoeuvre d'une armature porteuse ou non d'une couverture, qui forme la structure d'un parapluie, d'une ombrelle, d'un parasol de jardin ou forain, d'un auvent, d'une antenne spatiale, d'une ancre flottante, d'un grappin, d'une protection de lance de pulvérisation, d'un collecteur de fruits, et qui a pour fonction courante de protéger les personnes des précipitations climatiques, des radiations solaires ou autres et de façons plus particulières de capter des ondes, des particules pulvérulentes, des fruits ou de ralentir voire ancrer un véhicule lorsqu'il s'agit de l'ancre flottante ou du grappin.

En ce qui concerne le parapluie ou le parasol, l'objet classique se présente sous la forme d'une couverture dite aussi toile disposée sur une structure composée de branches, nommées aussi baleines pour celles qui sont les plus longues et situées à la partie supérieure et les autres situées en position inférieures nommées fourchettes qui manoeuvrent les précédentes. Les baleines sont articulées à un mât par l'intermédiaire d'une pièce nommée noix et les fourchettes sont articulées audit mât par l'intermédiaire d'une bague nommée coulant.

L'ouverture des objets similaires aux parapluies et parasols se fait traditionnellement en déplaçant vers le haut, le coulant sur lequel sont fixées les fourchettes en forme de bras articulés entraînant les baleines portant la couverture. La fermeture se fait en sens inverse le coulant descendant vers le manche ou poignée. Ce type d'accrochage offre plusieurs inconvénients. Premièrement attendu que dans le système classique, l'objet peut présenter deux positions d'équilibre, l'une normale lorsque les baleines porteuses de la toile forment un angle inférieur à 90° par rapport au mât et l'autre position dite du «retournement » lorsque ces mêmes baleines porteuses de la toile forment un angle supérieur à 90° par rapport au mât. Deuxièmement, attendu que dans le système classique la couverture est fixée d'une manière permanente, cela entraîne l'impossibilité de la changer facilement, ni de la retirer pour la réparer ou pour la nettoyer. Troisièmement, attendu que dans le système classique l'extrémité en pointe des baleines dépasse de la toile, il existe un danger certain pour les yeux des personnes côtoyées. Enfin quatrièmement, dans le système classique, bien que très astucieux, les dispositifs, pour rendre pliables ces objets, sont compliqués et fragiles.

Le dispositif selon l'invention permet de remédier à ces quatre inconvénients ci-dessus précités.

De plus dans le cas particulier du parapluie dit forain ou du parasol dit forain, ce dispositif offre quatre avantages par rapport aux objets similaires classiques. Premièrement, ce dispositif permet l'accrochage plus facile et plus efficace des objets à présenter. Deuxièmement, il facilite l'ouverture puisque le déploiement de la couverture se fait en poussant vers le sol la partie extérieure du mât, au lieu d'effectuer un effort vers le haut. Troisièmement, dans le cas de l'utilisation de deux toiles, il permet à l'air chaud et aux insectes de s'échapper vers le haut et quatrièmement il offre à la fois les trois sécurités de non-retournement du parapluie, et une sécurité supplémentaire de non-envol puisque si les pressions sont trop fortes le parasol peut se retourner vers le haut mais sans se casser.

Dans le cas de la protection de lance de pulvérisation, ce dispositif est entièrement nouveau, il serait utile pour protéger les jardiniers, en particulier, lorsque ceux-ci pulvérisent des produits toxiques avec une lance de type pompe à bras ou à compresseur.

Dans le cas du collecteur de fruits cela permet une cueillette plus aisée avec tamisage des feuilles et autres brindilles qu'avec les dispositifs utilisés qui sont en général des toiles déposées sur le sol.

En ce qui concerne le grappin classique, celui-ci se présente en général les branches dites griffes déjà en position ouverte. Néanmoins certains grappins présentent un système articulé dans lequel les griffes sont déployées juste avant l'envoi de l'engin, par rotation des griffes en les maintenant de façon perpendiculaire à l'axe et ce de façon fixe grâce à un anneau de blocage. Ce type d'accrochage offre plusieurs inconvénients. Premièrement attendu que dans le système classique, l'objet déplié est bloqué en position ouverte, il ne peut être dégagé si les griffes sont coincées dans un obstacle. Deuxièmement attendu que dans le système classique l'ouverture, quand elle est possible, se fait avant le jet de l'objet, il peut y avoir freinage intempestif lors du lancer mais aussi un danger potentiel lors du stockage.

Le dispositif selon l'invention permet de remédier à ces deux inconvénients ci-dessus précités puisque ce grappin s'envoie en position fermée et qu'il peut ouvrir ses griffes et ainsi se libérer d'un engagement.

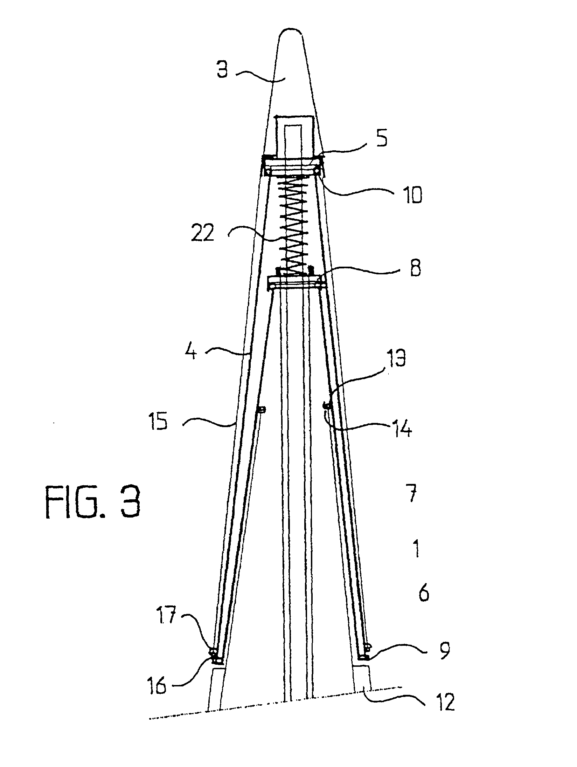

Le brevet FR 760 703 enseigne un parapluie comportant une hampe a sur laquelle coulisse un long tube e portant des baleines pivotantes d. Une toile de couverture c, en appui axial sur une calotte b au sommet de la hampe a, est fixée en pourtour aux extrémités libres des baleines d, de façon à être tendue en position replié du parapluie. L'ensemble forme alors un triangle aplati, avec un grand côté externe (la toile tendue), un grand côté interne (la baleine) conservant une faible inclinaison sur l'axe de la hampe a, et, au sommet, un petit côté à faible inclinaison opposée, c'est-à-dire que la calotte d'appui b déborde radialement par rapport au point de fixation de la baleine d sur le long tube e. De ce fait, en tirant le long tube e vers la base de la hampe a, le triangle s'ouvre. C'est la toile c qui sert d'élément tendu, tracteur, forçant l'extrémité externe de la baleine d à suivre un arc de cercle autour de la calotte b lorsque son extrémité interne haute, de support des baleines d, s'éloigne de la calotte b. Ce parapluie est donc parfaitement fonctionnel avec les seuls éléments ci-dessus. Il comporte en outre un élément d'appui f ou i ou l. Cet élément d'appui ne sert que lorsque le parapluie est (déjà) enl position ouverte. Sa fonction est d'empêcher le retournement des baleines d, c'est-à-dire la poursuite de leur mouvement d'ouverture. L'élément d'appui peut être une tige f ou une chaîne i de retenue vers la base, agissant donc en traction. Ce peut aussi être une tige entretoise l de butée, agissant donc en compression. Il est indiqué qu'il s'agit d'un élément "d'appui", c'est-à-dire d'un élément à fonction statique, fonctionnel uniquement en position ouverte. Sa fonction est de bloquer : il s'oppose à l'action des moyens de manoeuvre au-delà d'une certaine course de ceux-ci. C'est une butée, qui n'exerce aucune traction sur les baleines lors du déploiement du parapluie. En outre, la figure 3 et le texte correspondant ne comportent aucun enseignement technique, car le montage décrit ne peut pas assurer la fonction prévue. En effet, l'entretoise d'appui l de la figure 3 ne peut remplir sa fonction de butée de limitation de l'ouverture des baleines d : elle est solidaire d'une douille n coulissant sur la baleine d, si bien que, en cas d'effort du vent vers le haut, l'entretoise l coulisse en augmentant la longueur du tronçon de base de la baleine d, et n'exerce donc aucun appui.

L'invention comporte en effet, selon une première caractéristique un mât composé de deux parties coulissant l'une dans l'autre, la partie intérieure étant plus longue que la partie extérieure. Selon l'invention sur la partie intérieure dudit mât s'accrochent par un dispositif circulaire d'articulation nommé noix de courts bras articulés appelés fourchettes. Selon l'invention, sur la partie extérieure du même mât s'accrochent par un dispositif circulaire d'articulation nommé coulant de longues branches que l'on nommera baleines. Par ailleurs, chaque fourchette est articulée sur une baleine à une position adéquate à la fonction de l'objet. C'est le mouvement relatif de coulissement entre ces deux parties du mât qui assure la fermeture et l'ouverture de l'objet puisqu'en position repliée la partie extérieure du mât est en position haute, c'est à dire le coulant proche de la noix et donc proche du sommet de l'objet. Le mouvement d'éloignement du coulant par rapport à la noix entraîne vers le bas la partie articulée de la baleine sur le coulant. Mais ladite baleine est alors tirée vers le haut puisqu'elle est elle-même articulée sur une fourchette accrochée aussi à la noix au sommet de la partie intérieure du mât. Ce qui vient d'être décrit ci-dessus, justifie le qualificatif «d'inversé » du système puisque dans les objets similaires classiques, c'est un mouvement vers le sommet et non vers le bas dans le cas de l'invention qui déploie la couverture et de plus ce sont les fourchettes situées en position inférieure qui poussent les baleines dans les objets similaires classiques alors que dans l'invention les fourchettes sont en position supérieure par rapport aux baleines et les tirent vers le sommet. Le nombre de baleines peut être variable, de 6 à 12, en relation avec la fonction de l'objet, par exemple 8 pour des parapluies et parasols classiques. La longueur des baleines aussi peut varier en fonction de l'usage, par exemple, les deux cas extrêmes sont les baleines très courtes dans le cas des ancres et des grappins (on les appelle des griffes) et les fourchettes très longues dans le cas du parasol forain.

L'invention comporte selon une seconde caractéristique une innovation au niveau de sa couverture, puisque celle-ci, peut revêtir deux formes différentes dotées de plusieurs types d'accrochage. Lorsque l'objet de l'invention n'est pas pliable, cette structure originale peut recevoir une seule couverture de type classique fixée de façon pérenne mais cela réduit considérablement les possibilités de cette innovation puisque celle-ci permet de recevoir facilement une couverture amovible composée de deux parties distinctes, une toile dite supérieure, compte tenu de l'orientation normale de l'objet, recouvrant les fourchettes et une toile dite inférieure portée par les baleines. Lorsque l'objet de l'invention est pliable ce double choix existe aussi, à savoir une couverture à une toile ou une couverture à deux toiles. Néanmoins, dans le cas de l'objet pliable, la couverture a une toile est aussi amovible puisque les baleines en se pliant permettent l'installation de la toile. Une seule toile aussi peut être une solution avantageuse dans le cas du parasol forain.

Ce système dit inversé qui fait l'objet de la présente invention présente l'avantage de résoudre le risque de «retournement » dans le cas de parapluie et cela pour deux raisons qui découlent du système. Dans le cas d'un parapluie, la partie extérieure du mât étant bloquée en position basse par le manche, il ne présente qu'une seule position d'équilibre, celle de la position ouverte fonctionnelle. En effet, attendu que les fourchettes sont plus longues que les parties des baleines situées entre les points d'accrochage desdites baleines sur le coulant et les points d'accrochage des baleines et des fourchettes entre elles, il est impossible que les baleines dépassent l'angle critique de 90° comme dans un système similaire classique, position critique qui déclenchait le retournement. Secondement dans le cas, le plus favorable où l'objet présente deux toiles, le flux d'air peut s'écouler par les espaces existant entre ces deux toiles et donc s'évacuer sans causer de problème.

Afin de renforcer cette sécurité anti-retournement, dans le cas surtout particulier à la couverture formée d'une seule toile, un système de cordonnet courant dans un ourlet périphérique assurant le maintien de la longueur de la circonférence extérieure de l'objet peut être prévu car ce dispositif renforce la solidité de la couverture soumise à de fortes tractions en cas de vent particulièrement violents.

Selon la deuxième caractéristique de l'invention, la position respective des baleines et des fourchettes permet d'installer facilement et de manière amovible deux toiles de couverture indépendantes ce qui permet de les changer soit pour adapter le motif ou la couleur de la toile à celle de son habillement ou à la fonction que l'on attend de l'objet (parapluie ou parasol, par exemple) soit pour les réparer ou les nettoyer. La toile supérieure est installée par le haut et bloquée en haut par un embout coincé à force ou à vis et par le bas à l'aide d'un élastique ou autre système se fixant sur les fourchettes. La toile inférieure s'installe par le bas, grâce à un dispositif d'ourlet ou de passants disposé autour des baleines et par un dispositif d'élastique ou autres fixé sur les baleines pour en assurer la tension.

L'extrémité périphérique des branches de l'invention qui délimite la surface externe occupée par l'objet ne présente plus d'éléments pointus dangereux car ces extrémités sont dotées d'un cache arrondi se trouvant de plus à l'intérieur d'un ourlet de la toile inférieure et donc n'offre plus aucun danger pour la mitoyenneté. Dans le cas où l'installation d'un cordonnet anti-retournement y serait disposée cela augmenterait encore ce type de sécurité.

Le dispositif de base de l'invention, à savoir le mât composé de deux parties coulissant l'une dans l'autre permet de résoudre de façon simple la pliure du mât. En effet lorsque l'objet est fermé c'est à dire replié, le dispositif d'accrochage des baleines entre elles est situé bien au-dessus de la moitié du mât, ce qui permet de limiter la longueur de la partie extérieure du mât à une longueur correspondant à la moitié du mât. Dans ce cas de figure, la partie intérieure du mât pourra donc recevoir une articulation au niveau de sa moitié, cette articulation sera par ailleurs maintenu rigidifiée en place lorsque l'objet sera déployé car la partie extérieure du mât en se mettant en place par le mouvement de descente englobera et stabilisera cette articulation ; ainsi la longueur de l'objet en position pliée pourrait réduire de moitié sa longueur dépliée. Dans le cas où l'objet serait pliable, l'invention sera munie de baleines constituées de deux parties articulées. Les fourchettes s'articulant à une extrémité, au-delà de l'articulation médiane des baleines et ce afin par mécanisme de levier à déployer la demi-baleine périphérique au moment de l'ouverture.

Dans le cas du parasol, si on ne limite pas le déplacement relatif des deux parties du mât, le parasol peut alors s'ouvrir vers le haut, le rendant moins dangereux puisqu'il ne pourra pas alors s'envoler, cause de très nombreux accidents sur les plages ou ailleurs.

Dans le cas du grappin et de la protection de lance c'est ce retournement qui est particulièrement avantageux puisqu'il permet la protection dans le cas de la protection de lance et permet le désengagement du grappin.

Dans le cas de l'ancre flottante, une couverture plus ou moins importante est fixée sur les griffes d'un type grappin dont la structure serait de densité inférieure à celle du grappin puisque le grappin doit couler et l'ancre flottante doit flotter.

Selon les modes particuliers de réalisation:
- La section du mât peut être de diverses formes : ronde, carrée, rectangulaire, ovale, rectangulaire avec arrondis, ainsi que de toutes dimensions aussi bien en diamètre qu'en longueur. Dans le cas particulier d'auvent, plusieurs mâts peuvent assurer la structure, chacun desdits mâts portant un nombre de branches plus réduit et branches qui pourraient être disposées uniquement d'un côté du mât.
- Chacune des deux parties, intérieure et extérieure du mât peut être constituée de une ou plusieurs parties afin, entre autres, de faciliter le transport de l'objet et aussi de pouvoir en régler la hauteur utile.
- Les branches c'est à dire baleines et fourchettes peuvent être aussi de sections diverses : ronde, carrée, rectangulaire, ovale, rectangulaire avec arrondis, pleine, creuses, fendues, avec gouttière, et aussi jumelées c'est à dire qu'une branche peut être formée de plusieurs parties identiques ou non.
- Il serait très avantageux d'utiliser des fourchettes jumelles c'est à dire deux fourchettes côte à côte s'articulant pour tracter une seule baleine.
- Les baleines peuvent être articulées dans le cas de l'invention pliable.
- La couverture composée d'une ou de plusieurs toiles fixes ou amovibles peut être de matériaux variés : tissu divers en plastique, vinyle, aluminium, tulle, coton, taffetas, surah, satin, serge, dentelle, latex, cuir, fils d'antenne.
- Le bord externe de la couverture inférieure peut recevoir dans un ourlet un cordonnet réglable limitant la circonférence de cette couverture, renforçant la sécurité anti-retournement et permettre le maintien de l'objet fermé.
- Le système d'accrochage des couvertures sur les branches peut être réalisé de plusieurs façons : avec crochet, avec pression, avec Velcro, par engagement d'une pièce dans la gouttière de la branche, par anneau coulissant.
- Le mât peut être articulé pour rendre l'invention pliable.
- Le mât peut disposer d'un pied intégré.
- Le mât peut posséder un dispositif de type pédale ou de poignée fixé sur sa partie extérieure pour apporter une aide à la manoeuvre d'ouverture de l'objet.
- L'embout qui se situe en partie sommitale de l'objet peut recevoir une pointe, une boule ou une pièce de forme intermédiaire ; ces formes peuvent être pleines ou creuses ; cet embout est amovible, fixé «à force» ou vissé sur la partie intérieure du mât sur laquelle il maintient la partie centrale de la couverture.
- La poignée peut recevoir un manche classique en crosse, mais aussi d'autres formes : droites et pointue lorsqu'il s'agira, par exemple, d'un parasol, sous forme d'anse en crosse, en pommeau, avec un anneau pour un grappin.
- Un ressort de compression peut être disposé en option de façon adéquate entre la noix et le coulant pour faciliter l'ouverture de l'invention.

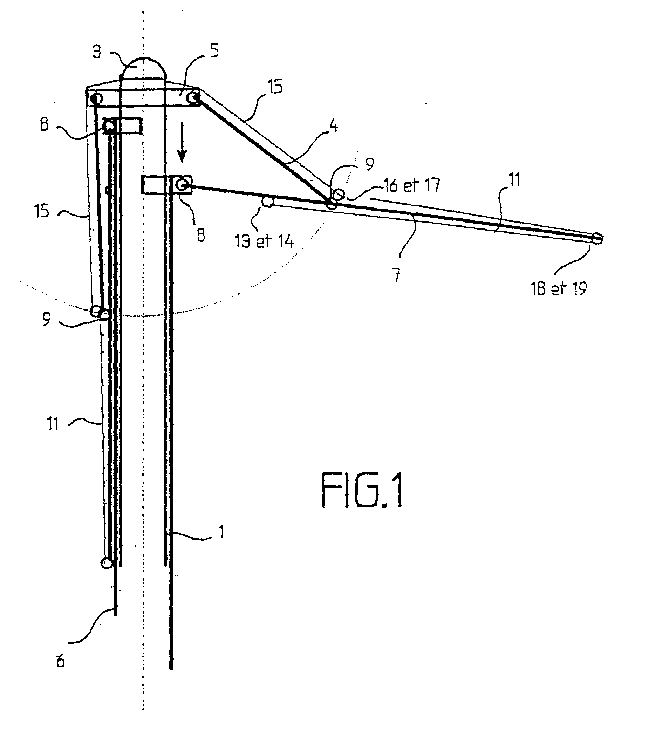

Les dessins annexés illustrent l'invention
La figure 1 montre le principe de l'invention. La moitié gauche du dessin montre la structure lorsque l'objet est en position fermée et la partie droite du dessin lorsque l'objet est en position ouverte.
La figure 2 représente une coupe longitudinale de l'invention en position fermée, dans le cas où l'invention serait un parapluie.
La figure 3 montre un détail de la partie supérieure du même objet.
La figure 4 montre la toile supérieure de la couverture vue du haut, qui sur ce dessin, est quadrillée.
La figure 5 montre la toile inférieure de la couverture vue du haut quadrillée aussi.
La figure 6 représente une coupe longitudinale simplifiée de l'invention lorsqu'elle est en position ouverte Afin de ne pas surcharger le dessin, une partie des branches et de la couverture d'un seul côté a été dessinée.
La figure 7 représente un dispositif d'accrochage et d'articulation des branches :

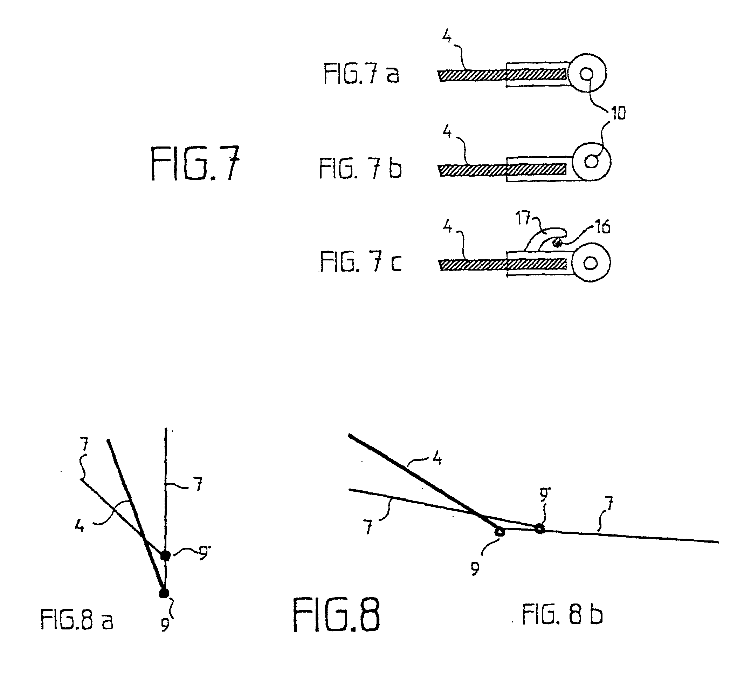

   Figure 7 a : Dispositif d'articulation des baleines sur le coulant.
   Figure 7 b : Dispositif d'articulation des fourchettes sur la noix
   Figure 7 c : Dispositif d'articulation des fourchettes sur celui des baleines avec présentation du crochet fixant l'élastique
La figure 8 représente l'adaptation des dispositifs d'articulation des fourchettes et des baleines entre elles dans le cas d'un parapluie pliable:
   Figure 8 a : en position fermée.
   Figure 8 b : en position ouverte.

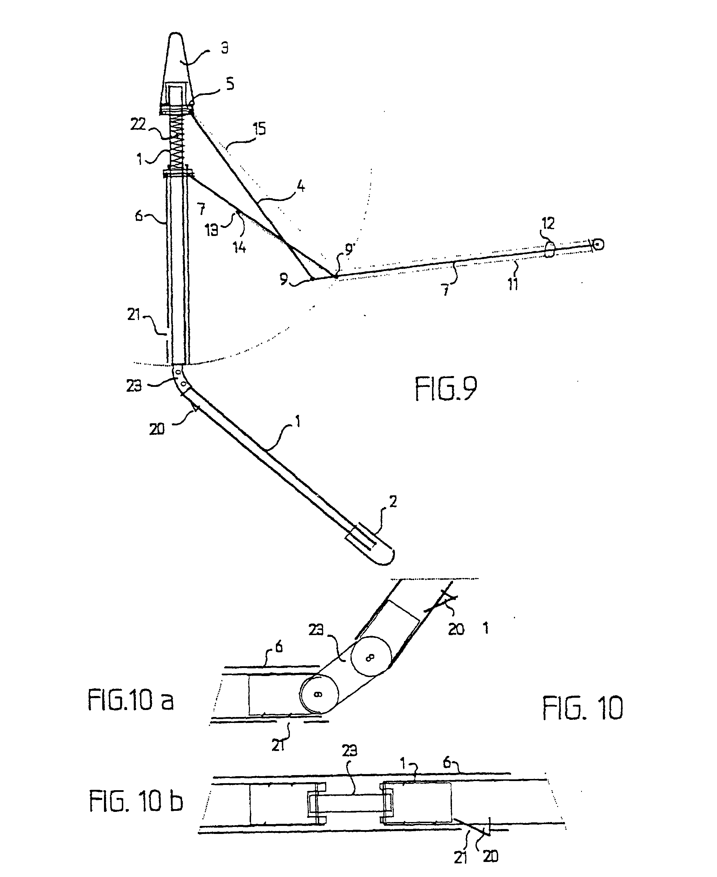

La figure 9 représente l'invention dans le cas d'un parapluie. Afin de ne pas surcharger le dessin, une partie des branches et de la couverture d'un seul côté a été dessinée.
La figure 10 représente un dispositif rendant le mât pliable et venant se loger dans les deux parties de la tige intérieure du mât:
   Figure 10 a : une vue de côté de ce dispositif en position de repliement.
   Figure 10 b : même dispositif, selon une vue perpendiculaire à la figure 9 a (sauf pour les pièces 20 et 21) mais dans la position d'un objet ouvert dans laquelle l'articulation (23) est bloquée et donc le mât droit.

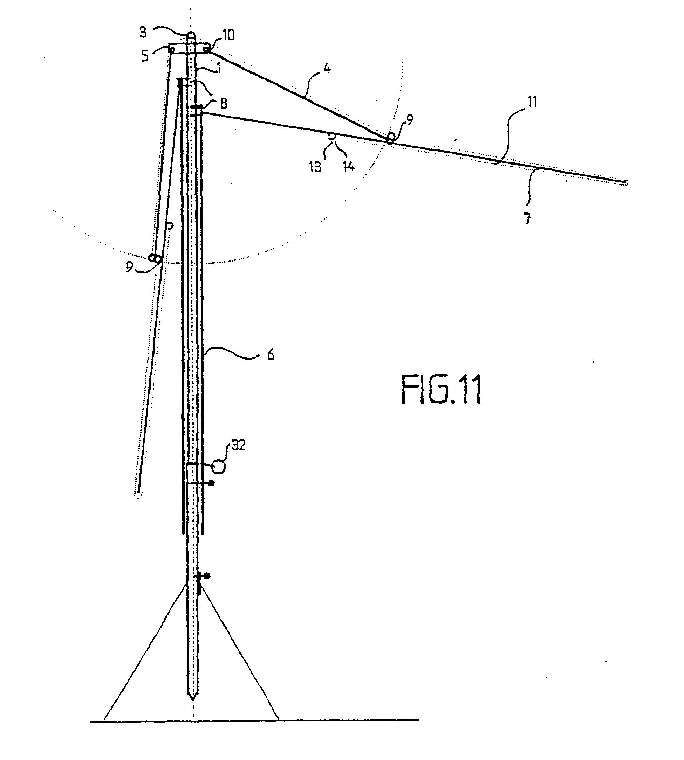

La figure 11 représente un parasol dit de jardin dont la partie du mât intérieure est en 2 parties. Le côté gauche du dessin montre le parasol fermé et la partie droite montre le parasol ouvert. Un pied est esquissé avec système de blocage.

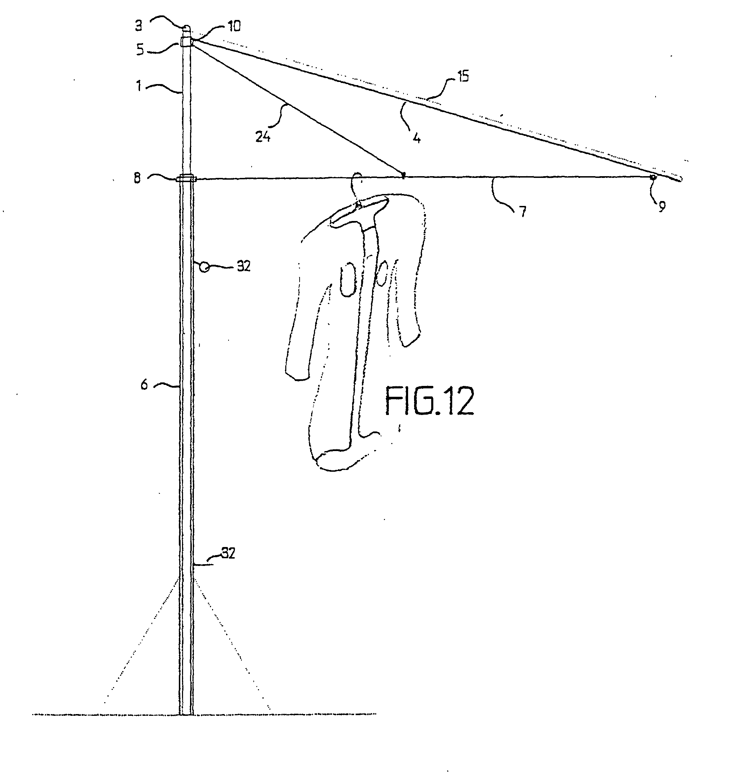

La figure 12 représente un parasol dit forain en position ouverte. Une seule branche porteuse a été représentée. Un vêtement est accroché pour montrer la fonction de support.

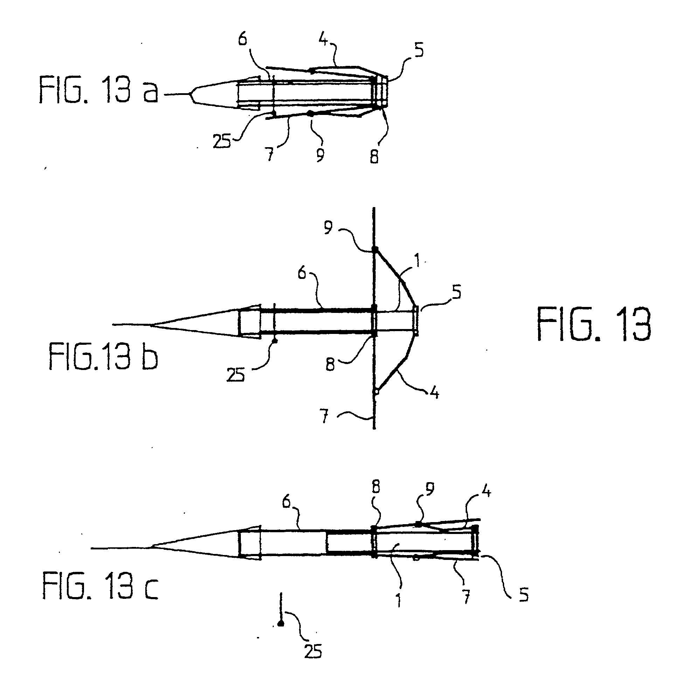

La figure 13 représente un grappin :
   Figure 13 a : Grappin fermé en position de stockage et d'envoi.
   Figure 13 b : Grappin en position active, d'accrochage.
   Figure 13 c : Grappin en position retournée dite de désengagement.

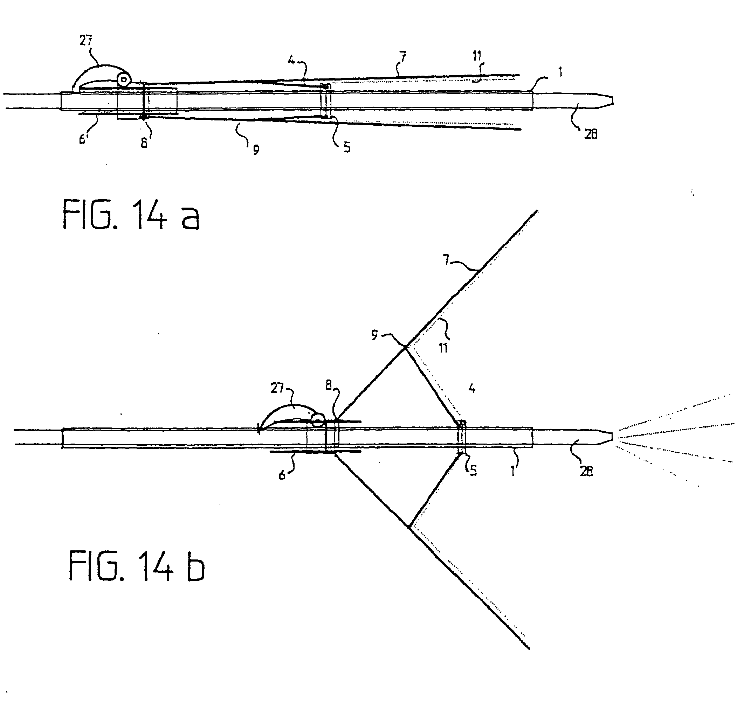

La figure 14 représente une protection de lance à pulvérisation :
   Figure 14 a : Protection de lance en position fermée, de transport.
   Figure 14 b : Protection de lance en position ouverte, d'usage avec jet.

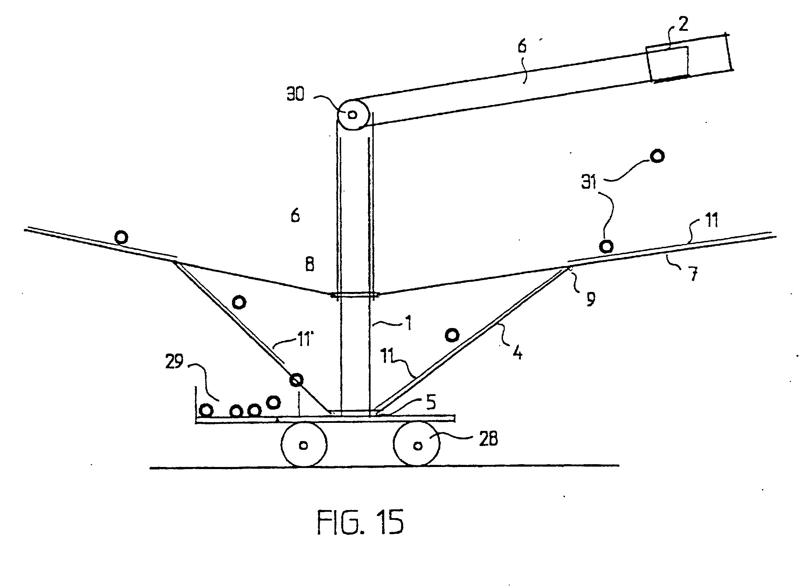

La figure 15 représente un collecteur de fruits en position de collecte.

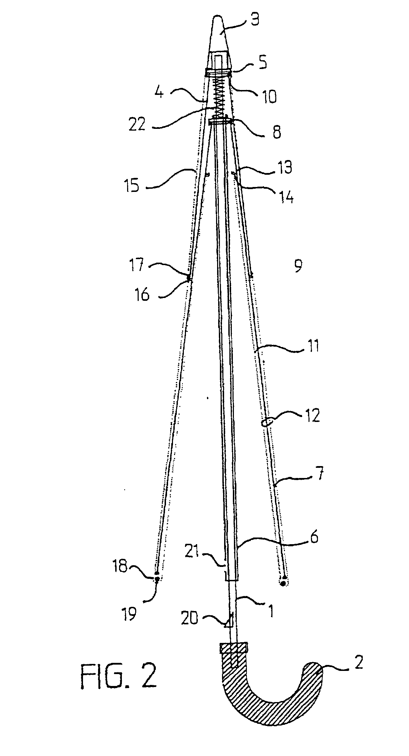

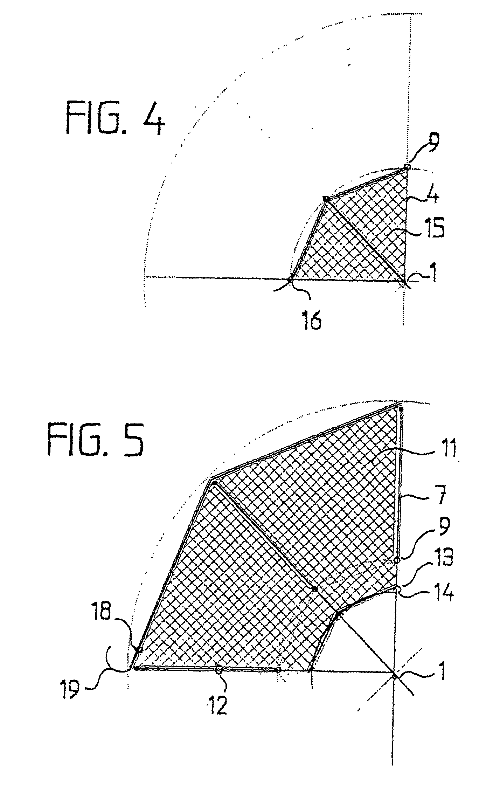

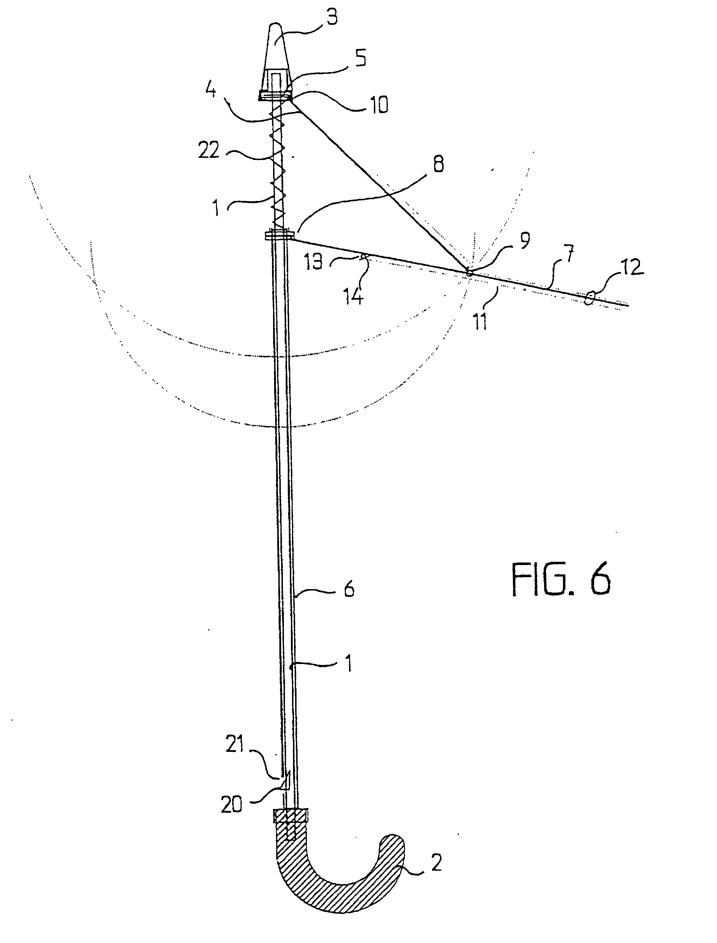

Afin de faciliter la description de l'invention, la nomenclature portera sur un exemple particulier, tout d'abord celui du parapluie (figures 2 à 10) et pour préciser les positions de chaque pièce nous envisagerons le cas où l'objet est maintenu dans une position normale d'ouverture à savoir la poignée de maintien vers le sol et la couverture de protection déployée vers le ciel.

En référence avec ces dessins le mât intérieur (1) est l'axe de l'objet puisque c'est sur lui que se fixent la poignée (2), l'embout (3), la noix (5). Les fourchettes (4) sont fixées librement, c'est à dire avec une articulation qui permet un mouvement de rotation sagittale sur la partie intérieure du mât (1), par le dispositif classique, existant sur les objets de même type, appelé noix (5). La tige extérieure du mât (6) est creuse et de diamètre légèrement supérieur afin de pouvoir coulisser autour de la tige intérieure du mât (1). Sur la tige extérieure du mât (6) sont fixées librement les baleines (7) par un dispositif classique appelé coulant (8), que l'on trouve classiquement dans des objets similaires. Notons que par rapport à un objet classique du même type, on observe une inversion des branches, les courtes (4) étant au-dessus des longues (7). Les fourchettes et les baleines sont fixées librement entre elles par une articulation originale (9 ) et à la noix et au coulant par une extrémité à oeil classique (10) maintenu par un fil. Dans le cas d'une couverture double, la couverture inférieure (11) possède comme dispositif d'accrochage un ourlet de la toile (12) dans lequel s'enfile chaque baleine (7). Cette couverture inférieure (11) est tendue par son maintien, à l'extrémité périphérique par la fermeture de l'ourlet (12) et du côté central par un élastique rond (13) courant dans un ourlet s'accrochant sur un crochet (14) fixé solidairement à la baleine (7). La couverture supérieure (15) est fixée au sommet de la partie intérieure du mât (1) par l'application de l'embout (3) et par un élastique circulaire rond (16) s'accrochant sur des crochets (17) fixés solidairement aux extrémités périphériques des fourchettes (9). Un ourlet (18) situé au niveau périphérique de la couverture inférieure (11) peut recevoir un cordonnet (19) que l'on peut plus ou moins serrer pour régler la taille de la circonférence de l'invention. Ce cordonnet (19) peut être aussi utilisé pour maintenir l'invention en position fermée.
Vu les divers dispositifs d'accrochage décrits précédemment, le déplacement vers la poignée (2) de la partie extérieure du mât (6) entraîne l'éloignement du coulant (8) par rapport à la noix (5). Ce déplacement, attendu que les fourchettes (4) sont accrochées aux baleines (7) par le dispositif (9) entraîne le déploiement des baleines (7) ainsi que des couvertures inférieure (11) et supérieure (15) qui y sont fixées. Un dispositif classique d'arrêt provisoire (20) du déplacement relatif des deux tiges du mât assure le maintien de l'ouverture de l'invention lorsqu' il est disposé dans l'ouverture complémentaire (21). Un dispositif sous forme d'un ressort à compression (22) pourrait aussi assister l'ouverture de l'invention puisque le ressort comprimé entre la noix (5) et le coulant (8) sera comprimé à la fermeture et donc redonnera son énergie potentielle lors de l'ouverture.
Dans sa forme pliable l'invention possède un premier dispositif d'articulation (23) de la partie intérieure du mât qui peut se présenter sous la forme d'une double rotule de type paravent ou chaîne à vélo (23) mais il pourrait être réalisé aussi en matériau souple tels que caoutchouc, cordage, tresse métallique. Ce dispositif d'articulation (23), quel qu'il soit, se trouve bloqué donc rigidifié par la partie extérieure du mât qui l'enveloppe lorsque l'objet est ouvert et le système de blocage (20 et 21) se trouve en conjonction. Ce dispositif de pliage du mât peut aussi se retrouver dans le cas des parasols et autres objets similaires Dans sa forme pliable l'invention possède une deuxième adaptation au niveau des baleines (7). Celles-ci sont en deux parties pour assurer leur repliement. Dans ce cas aussi les fourchettes s'articulent sur l'extrémité de la partie centrale de la demi-baleine externe (9), alors que les demi-baleine s'articulent entre elles entre cette extrémité et l'autre (9') de telle sorte à faire levier afin que les fourchettes en tirant déplient cette demi-baleine externe et donc ouvrent la couverture.
Dans sa forme parasol ou parapluie forain le mât peut être aussi sous sa forme pliable. La longueur de la partie externe du mât peut être plus ou moins développée. La partie interne du mât peut-être en deux parties et une pédale ou une poignée de manoeuvre (32) peut être adaptée sur la partie extérieure dudit mât pour faciliter la manoeuvre. Un pied peut aussi être intégré à cette structure.
Dans sa forme parapluie forain (figure 11) un ou plusieurs câbles (24) de maintien par baleines s'accrochent sur la noix (5) et sur un système d'attache mobile de la baleine (7) afin de renforcer sa tenue ; mais ce dispositif n'est en rien obligatoire, il dépend de la charge qui serait accrochée aux baleines.
Dans le cas du grappin (figure 12) une goupille (25) dite de sécurité bloque l'ouverture en position d'accrochage. Une fois cette goupille (25) retirée le grappin peut s'ouvrir, les griffes (7) se repliant vers le haut contre partie intérieure du mât (1). Le cordage ou amarre (26) passe par un orifice du grappin et maintien l'embarcation ou autre à son extrémité. Dans le cas de la protection de lance à pulvérisation (figure 13) le dispositif s'ouvre jusqu'à se retourner. Une seule couverture (11) imperméable et si possible transparente s'applique sur les branches (4 et 7). Un levier de manoeuvre (27) actionne l'ouverture le blocage et la fermeture du dispositif.
Le collecteur de fruits (figure 14) est une sorte de parasol disposé à l'envers et posé sur un système de roulement (28) assurant sa mise en place et son transport Après gaulage, les fruits (31, olives, prunes, noix...) tombent sur la toile (11), roulent et tombent par l'ouverture de (11') dans une caisse (29) de réception. Le mât extérieur (6) grâce à une articulation (30) maintien le dispositif en position ouverte et en position fermée et sert à tracter l'objet en le faisant rouler sur deux roues.

## Revendications

1. Structure déployable comportant un mât (1, 6) portant, articulées sur lui (8, 10), des branches (7) ainsi que des extrémités de bras (4) articulés sur les branches (7) par des extrémités d'articulation opposées (9), le mât (1, 6) comportant une partie extérieure (6) montée coulissante sur une partie intérieure (1), l'articulation (10) des bras (4) sur le mât (1, 6) étant effectuée sur une noix (5) fixée à un sommet de la partie intérieure (1) du mât et les branches (7) étant articulées sur un coulant (8) fixé au sommet de la dite partie extérieure coulissante (6) qui sert d'élément transmetteur de mouvement pour déployer les branches (7) par traction sur les bras (4), servant alors à retenir par traction les branches (7) en position déployée, et pour reployer les branches (7), structure **caractérisée par le fait qu'**elle comporte une première partie formant couverture supérieure (15) rattachée au dit sommet de la partie intérieure (1) du mât et portée par les bras (4) en présentant un rayon au moins égal à la longueur des bras (4), et comportant une deuxième partie formant couverture inférieure (11) rattachée aux branches (7) et s'étendant radialement entre des extrémités libres des branches (7) et un point de chaque branche (7) situé entre l'articulation (8) à la partie externe (6) du mât et l'articulation (9) du bras associé (4).

2. Structure selon la revendication 1, dans laquelle les couvertures supérieure et inférieure (15, 11) sont amovibles, la couverture inférieure (11) comportant des ourlets (12) de réception des extrémités libres des branches (7) et il est prévu des moyens de maintien sous tension de bords périphériques intérieur (13, 14) et extérieur (18, 19) de la couverture inférieure (11).

3. Structure selon l'une des revendications 1 et 2, dans laquelle la couverture supérieure (15) comporte un orifice central traversé par le sommet de la partie intérieure (1) du mât agencé pour recevoir un embout sommital (3), et un bord périphérique externe de la couverture supérieure (15) est agencé pour coopérer avec des moyens de maintien en tension de celui-ci.

4. Structure selon l'une des revendications 1 à 3, dans laquelle il est prévu, en périphérie de la couverture inférieure (11), un ourlet (18) de réception d'un cordonnet (19), de longueur réglable, à titre de sécurité contre un passage des branches (7) au-delà de la position déployée.

5. Structure selon l'une des revendications 1 à 3, dans laquelle, pour limiter un volume utile au-delà de la noix de sommet (5), la partie intérieure (1) du mât présente une longueur d'au moins deux fois la longueur des bras (4), afin de permettre aux branches (7), lors du déploiement, de dépasser une position de déploiement total et effectuer un retournement par rabattement au-delà de la noix de sommet (5).

6. Structure selon l'une des revendication 1 à 5, du genre grappin, comportant une goupille (25) de limitation de course de la partie extérieure du mât (6, 8) par coopération avec deux trous respectifs de la partie intérieure (1) et de la partie extérieure (6, 8) du mât, la partie intérieure (1) du mât étant une rainure axiale dans laquelle la goupille (25) puisse circuler, permettant un passage entre une position de reploiement et une position de déploiement des branches (7).

7. Structure selon l'une des revendications 1 à 6, dans laquelle la partie intérieure du mât (1) comporte deux tronçons reliés par une articulation double de pliage (23) de façon à permettre, en position de reploiement, de plier la partie intérieure du mât (1), la partie extérieure du mât (6, 8) étant de longueur suffisamment courte pour ne pas alors dépasser le niveau de l'articulation (23), et, en position de déploiement, de maintenir alignés les deux tronçons de la partie intérieure du mât (1) par blocage de l'articulation (23) de la partie intérieure du mât (1) par sa partie extérieure (6, 8).

8. Structure selon l'une des revendications 1 à 7, pour en particulier un parapluie pliable, dans laquelle chaque branche (7) est composée d'une demi-branche radialement interne et une demi-branche radialement externe, mutuellement articulées (9'), la demi-branche radialement externe se prolongeant vers le mât (1), au-delà de l'articulation mutuelle (9'), pour fournir la dite extrémité d'articulation opposée (9) sur le bras (4).

9. Structure selon l'une des revendications 1 à 8, comportant un ressort de compression (22) entre la noix (5) et le coulant (8) pour faciliter le dit déploiement.

10. Structure selon la revendication 9, dans laquelle le mât (1) comporte un logement axial pour le ressort (22), hélicoïdal.

11. Structure selon l'une des revendications 1 à 10, comportant un moyen de manoeuvre du type pédale ou poignée fixé à la partie extérieure du mât (6, 8) pour faciliter son déplacement vers une partie de base de la partie intérieure (1) du mât.

## Patentansprüche

1. Entfaltbare Struktur, einen Tragmast (1, 6) mit angelenkten (8, 10) Zweigen (7) sowie an diesen Zweigen (7) durch entgegengesetzte Anlenk-Enden (9) angelenkten Arm-Enden (4) umfassend, wobei der Mast einen Außenteil (6) umfasst, der gleitend auf einen Innenteil (1) montiert ist, die Arme (4) an dem Mast (1, 6) an einer Muffe (5) angelenkt (10) sind, die an einer Spitze des Innenteils (1) des Masts befestigt ist, und die Zweige (7) an einem Schieber (8) angelenkt sind, der an der Spitze des genannten gleitenden Außenteils (6) des Masts festgemacht ist und der als Bewegungsübertragungselement dient, um die Zweige (7) zu entfalten - durch Zug an den Armen (4), die dann dazu dienen, die Zweige (7) durch Zug in der entfalteten Stellung zu halten -, und um die Zweige (7) zu falten,
**dadurch gekennzeichnet, dass** sie einen die obere Decke (15) bildenden ersten Teil umfasst, befestigt an der genannten Spitze des Innenteils (1) des Masts und getragen durch die Arme (4), wobei er einen Radius wenigstens gleich der Länge der Arme (4) aufweist, und einen die untere Decke (11) bildenden zweiten Teil umfasst, der an den Zweigen (7) befestigt ist und sich radial zwischen den freien Enden der Zweige (7) und einem Punkt jedes Zweigs (7) erstreckt, der sich zwischen der Anlenkung (8) an dem Außenteif (6) des Masts und der Anlenkung (9) des zugeordneten Arms (4) befindet.

2. Struktur nach Anspruch 1, bei der die obere und die untere Decke (15, 11) beweglich sind, wobei die untere Decke (11) Hohlsäume (12) zur Aufnahme der freien Enden der Zweige (7) und Einrichtungen umfasst, um periphere innere (13, 14) und äußere (18, 19) Ränder der unteren Decke (11) unter Spannung zu halten.

3. Struktur nach einem der Ansprüche 1 und 2, bei der die obere Decke (15) eine zentrale Öffnung aufweist, die von der Spitze des Innenteils (1) des Masts durchquert wird und der Aufnahme einer Spitzenkappe (3) dient, und ein äußerer peripherer Rand der oberen Decke (15) so konzipiert ist, dass er mit Einrichtungen zusammenwirkt, die ihn unter Spannung halten.

4. Struktur nach einem der Ansprüche 1 bis 3, bei der an der Peripherie der unteren Decke (11) ein Hohlsaum (18) zur Aufnahme einer Kordel bzw. Schnur (19) mit einstellbarer Länge vorgesehen ist, die dazu dient, sicherzustellen, dass die Zweige (7) die Entfaltungsstellung nicht überschreiten.

5. Struktur nach einem der Ansprüche 1 bis 3, bei der zur Begrenzung eines Nutzvolumens über die Spitzenmuffe (5) hinaus die Länge des Mast-Innenteils (1) wenigstens doppelt so groß ist wie die Länge der Arme (4), um den Zweigen (7) bei der Entfaltung zu ermöglichen, eine Totalentfaltungsstellung zu überschreiten und durch eine Kippbewegung über die Spitzenmuffe (5) hinaus umzuschlagen.

6. Struktur nach einem der Ansprüche 1 bis 5 nach Art eines Ankers, mit einem Stift (25) zur Begrenzung des Wegs des Außenteils des Masts (6, 8) durch Kooperation mit zwei Löchern des Innenteils (1) beziehungsweise des Außenteils (6, 8) des Masts, wobei der Innenteil (1) des Masts eine axiale Nut umfasst, in welcher der Stift (25) sich bewegen kann, was einen Übergang zwischen einer gefalteten Stellung und einer entfalteten Stellung der Zweige (7) ermöglicht.

7. Struktur nach einem der Ansprüche 1 bis 6, bei welcher der Mast-Innenteil (1) zwei durch ein Doppelfaltungsgelenk (23) verbundene Teilstücke umfasst, so dass es möglich ist, in der gefalteten Stellung den Mast-Innenteil (1) zu krümmen, wobei der Außenteil (6, 8) des Masts so kurz ist, dass das Niveau des Gelenks (23) nicht überschreitet ist, und in der entfalteten Stellung die beiden Teilstücke des Mast-Innenteils (1) durch Blockierung des Gelenks (23) des Innenteils (1) des Masts durch seinen Außenteil (6, 8) so zu halten, dass sie fluchten.

8. Struktur nach einem der Ansprüche 1 bis 7, insbesondere für einen zusammenfaltbaren Regenschirm, bei der jeder Zweig (7) gebildet wird durch einen radialen Innen-Halbzweig und einen radialen Außen-Halbzweig, gegenseitig angelenkt (9'), wobei der radiale Außen-Halbzweig sich in Richtung Mast (1) verlängert über die gegenseitige Anlenkung (9') hinaus, um das genannte entgegengesetzte Anlenk-Ende (9) in dem Arm (4) zu realisieren.

9. Struktur nach einem der Ansprüche 1 bis 8 mit einer Druckfeder (22) zwischen der Muffe (5) und dem Schieber (8), die dazu dient, die Entfaltung zu erleichtern.

10. Struktur nach Anspruch 9, bei welcher der Mast (1) eine axiale Aufnahme für die Feder als Spiralfeder (22) umfasst.

11. Struktur nach einem der Ansprüche 1 bis 10 mit einer Fuß- oder Handbetätigungseinrichtung, die am Mast-Außenteil (6, 8) befestigt ist, um seine Verschiebung in Richtung eines Basisteils des Mast-Innenteils (1) zu erleichtern.

## Claims

1. A deployable structure comprising a mast (1, 6) supporting, articulated on it (8, 10), branches (7) and ends of arms (4) articulated on the branches (7) by opposite articulation ends (9), the mast (1, 6) comprising an outer portion (6) mounted slidingly on an inner portion (1), the articulation (10) of the arms (4) on the mast (1, 6) being made on a wharve (5) attached to a summit of the inner portion (1) of the mast and the branches (7) being articulated on a sliding ring (8) attached to the summit of the said outer sliding portion (6) which serves as an element transmitting movement in order to deploy the branches (7) by traction on the arms (4), then serving by traction to keep the branches (7) in deployed position, and in order to refold the branches (7), the structure **characterized by** the fact that it comprises a first portion forming an upper cover (15) attached to the said summit of the inner portion (1) of the mast and supported by the arms (4) while having a radius at least equal to the length of the arms (4), and comprising a second portion forming a lower cover (11) attached to the branches (7) and extending radially between the free ends of the branches (7) and a point of each branch (7) situated between the articulation (8) at the outer portion (6) of the mast and the articulation (9) of the associated arm (4).

2. A structure according to claim 1, in which the upper and lower covers (15, 11) are removable, the lower cover (11) comprising hems (12) for receiving the free ends of the branches (7) and means are provided for keeping in tension inner peripheral edges (13, 14) and outer peripheral edges (18, 19) of the lower cover (11).

3. A structure according to one of claims 1 and 2, in which the upper cover (15) comprises a central orifice traversed by the summit of the inner portion (1) of the mast arranged in order to receive a summit ferrule (3), and an outer peripheral edge of the upper cover (15) is arranged to interact with means for keeping the latter in tension.

4. A structure according to one of claims 1 to 3, in which, at the periphery of the lower cover (11), a hem (18) is provided for receiving a cord (19), of adjustable length, for safety purposes against the branches (7) passing beyond the deployed position.

5. A structure according to one of claims 1 to 3, in which, to limit a useful volume beyond the summit wharve (5), the inner portion (1) of the mast has a length of at least twice the length of the arms (4), in order to allow the branches (7), during deployment, to pass beyond a full deployment position and carry out a reverse turn by folding back beyond the summit wharve (5).

6. A structure according to one of claims 1 to 5, of the grappler type, comprising a. pin (25) for limiting the travel of the outer portion of the mast (6, 8) by interacting with two respective holes of the inner portion (1) and of the outer portion (6, 8) of the mast, the inner portion (1) of the mast being an axial slot in which the pin (25) can circulate, allowing a travel between a refolding position and a deployment position of the branches (7).

7. A structure according to one of claims 1 to 6, in which the inner portion of the mast (1) comprises two sections connected via a double refolding articulation (23) in such a way as to allow, in refolding position, the inner portion of the mast (1) to be folded, the outer portion of the mast (6, 8) being of sufficiently short length not to pass beyond the level of the articulation (23), and, in deployment position, to keep the two sections of the inner portion of the mast (1) in line by locking the articulation (23) of the inner portion of the mast (1) with its outer portion (6, 8).

8. A structure according to one of claims 1 to 7, in particular for a foldable umbrella, in which each branch (7) consists of a radially inner half-branch and a radially outer half-branch, mutually articulated (9'), the radially outer half-branch extending towards the mast (1), beyond the mutual articulation (9'), in order to provide the said opposite articulation end (9) on the arm (4).

9. A structure according to one of claims 1 to 8, comprising a compression spring (22) between the wharve (5) and the sliding ring (8) in order to facilitate the said deployment.

10. A structure according to claim 9, in which the mast (1) comprises an axial housing for the helical spring (22).

11. A structure according to one of claims 1 to 10, comprising a means of operation of the pedal or handle type attached to the outer portion of the mast (6, 8) in order to facilitate its movement towards a base portion of the inner portion (1) of the mast.
